# EUROPÄISCHE PATENTSCHRIFT

(11) **EP 3 730 015 B1**
(45) Veröffentlichungstag und Bekanntmachung des Hinweises auf die Patenterteilung: **05.06.2024**
(21) Anmeldenummer: 19170795.9
(22) Anmeldetag: 24.04.2019
(51) Int. Cl.: A47J 43/046, A47J 43/07, A47J 27/00

(54) **HAUSHALTSKÜCHENMASCHINE**
KITCHEN APPLIANCE
APPAREIL ELECTROMENAGER

(43) Veröffentlichungstag der Anmeldung: 28.10.2020
(73) Patentinhaber: Vorwerk & Co. Interholding GmbH, 42270 Wuppertal (DE)
(72) Erfinder: Stein, Matthias, 45472 Mülheim an der Ruhr (DE); Sernecki, Miron, 58097 Hagen (DE)
(74) Vertreter: Gille Hrabal Partnerschaftsgesellschaft mbB Patentanwälte

(56) Entgegenhaltungen:
- EP-A1- 2 901 903
- EP-A1- 3 252 729
- DE-A1-102016 219 972

## Beschreibung

Die Erfindung betrifft eine Haushaltsküchenmaschine mit mehreren elektrisch betreibbaren Funktionskomponenten zum Zubereiten einer Speise in einem Topf. Eine Steuerungseinheit der Haushaltsküchenmaschine kann auf ein Rezept zugreifen und durch einen Rezeptschritt des Rezeptes veranlasst werden, eine der Funktionskomponenten in einer durch den Rezeptschritt definierten Weise zu betreiben. Die Erfindung betrifft ferner ein Verfahren und Computerprogrammprodukte.

Haushaltsküchenmaschinen wie der Thermomix^{®}, die auf digitale Rezepte zur teilautomatisierten Zubereitung einer Speise zugreifen können, sind bekannt. Zur Zubereitung einer Speise arbeitet sich ein Benutzer sukzessive durch die Rezeptschritte in der von dem Rezept vorgegebenen Reihenfolge wie beim Kochen nach einem Rezept in einem Kochbuch. EP 2 901 903 A1 offenbart ein Verfahren zum Betrieb einer Küchenmaschine. Gemäß einem Abarbeitungsvorgang ist die Zugabe einer hinsichtlich bestimmten Menge eines Mediums in ein Zubereitungsgefäß vorgesehen. Die Zugabe des Mediums wird hinsichtlich ihrer Menge erfasst und die erfasste Menge wird mit der für den Abarbeitungsvorgang vorgesehenen Menge, verglichen.

Es ist Aufgabe der Erfindung, eine weiterentwickelte Haushaltsküchenmaschine bereitzustellen.

Zur Lösung der Aufgabe dienen eine Haushaltsküchenmaschine gemäß Anspruch 1 sowie ein Verfahren und Computerprogrammprodukte gemäß den Nebenansprüchen. Vorteilhafte Ausführungsformen ergeben sich aus den Unteransprüchen.

Zur Lösung der Aufgabe dient eine Haushaltsküchenmaschine mit mehreren elektrisch betreibbaren Funktionskomponenten zum Zubereiten einer Speise in einem Topf. Eine Steuerungseinheit der Haushaltsküchenmaschine kann auf ein Rezept zugreifen und durch einen Rezeptschritt des Rezeptes veranlasst werden, eine der Funktionskomponenten in einer durch den Rezeptschritt definierten Weise zu betreiben. Das Rezept ist so konfiguriert, dass das Rezept für mehrere Rezeptschritte jeweils mindestens eine Startbedingung definiert. Die Steuerungseinheit ist so konfiguriert, dass die Steuerungseinheit in Abhängigkeit von den Startbedingungen der Rezeptschritte zumindest einen nächsten Rezeptschritt spätestens am Ende eines vorhergehenden Rezeptschrittes festgelegen kann. Es wird so ermöglicht, eine Speise teilautomatisiert in kürzerer Zeit zuzubereiten.

Das Rezept lässt also die Reihenfolge der Rezeptschritte offen, d.h., das Rezept definiert die Reihenfolge der Rezeptschritte nicht, sondern lediglich zumindest eine Startbedingung eines Rezeptschrittes. Die Reihenfolge der Rezeptschritte wird auf Basis zumindest der Startbedingungen der Rezeptschritte durch die Steuerungseinheit festgelegt. Die Reihenfolge der Rezeptschritte ist also durch das Rezept in einer variablen Art und Weise durch zumindest eine Startbedingung für einen jeweiligen Rezeptschritt definiert. Die Zubereitungszeit kann dadurch verkürzt werden.

Die Zubereitungszeit kann verkürzt werden, weil die Steuerungseinheit auf Basis eines Vergleichs der Startbedingungen mit der aktuellen Situation zu Beginn der Speisenzubereitung oder während der Speisenzubereitung die Reihenfolge der Rezeptschritte variabel und damit flexibel an die aktuelle Situation anpassen kann. Wenn z.B. ein Benutzer überdurchschnittlich lange für das Schneiden von Zwiebeln braucht, kann Zeit gespart werden, indem ein anderer Zubereitungsschritt z.B. zum Vorbereiten eines Tomatenmarks für eine Zwiebelpizza vorgezogen wird. Die Küchenmaschine kann dann die Tomaten zerkleinern und erhitzen, während der Benutzer die Zwiebeln zu Ende schneidet. In einem herkömmlichen digitalen Rezept einer Haushaltsküchenmaschine wird dem Benutzer die Reihenfolge der Schritte gewissermaßen aufgezwungen und der Rezeptschritt des Tomatenmarks würde zu einem späteren Zeitpunkt nach dem Zerkleinern der Zwiebeln erfolgen. Darüber hinaus kann die Zubereitungszeit durch die Definition von Startbedingungen von Rezeptschritten anstelle einer starren Rezeptschritt-Reihenfolge verkürzt werden, weil ein externes Nahrungsmittelbearbeitungsgerät wie z.B. ein Ofen, ein Mixer oder ein Kochtopf auf einem Herd verbessert bei der Festlegung der Reihenfolge der Rezeptschritte durch die Steuerungseinheit berücksichtigt werden kann. Je nach dem, welche externen Nahrungsmittelbearbeitungsgeräte zur Verfügung stehen, kann die Steuerungseinheit die Rezeptschritte in eine optimierte zeitliche Reihenfolge bringen. Auch eine variable Zuweisung von Rezeptschritten zu einem von mehreren zur Verfügung stehenden Nahrungsmittelbearbeitungsgeräten wird ermöglicht, indem ein Rezept zumindest eine Startbedingung für einen jeweiligen Rezeptschritt definiert, anstatt eine starre Rezeptschritt-Reihenfolge vorzugeben.

Typischerweise zählen z.B. ein Heizelement und/oder ein drehbares Werkzeug zum Zerkleinern oder Mischen zu den Funktionskomponenten einer Haushaltsküchenmaschine zum Zubereiten einer Speise.

Mit Rezept ist ein digitales Rezept gemeint. Ein digitales Rezept ist ein Datensatz, der mehrere Rezeptschritte definiert. Die Definition der Rezeptschritte umfasst mindestens jeweils eine Startbedingung. Jedem Rezeptschritt werden darüber hinaus Steuerbefehle für eine oder mehrere elektrisch betreibbare Funktionskomponenten der Haushaltsküchenmaschine zugeordnet. Optional kann die Definition des Rezepts zusätzlich Algorithmen umfassen, anhand derer die Steuerungseinheit in Abhängigkeit von mindestens einer Eingangsgröße ermitteln kann, ob eine Startbedingung erfüllt ist.

Die Definition enthält eine Priorisierungsinformation und/oder einen Priorisierungs-Algorithmus.

Vorzugsweise kann die Definition eine Zuordnung zu einem Rezeptschritt-Modul mit mehreren Rezeptschritten umfassen.

Mit Startbedingung eines Rezeptschrittes ist gemeint, dass der jeweilige Rezeptschritt erst dann ausgeführt wird, wenn die Startbedingung erfüllt ist. In einer Ausgestaltung umfasst ein Rezeptschritt mindestens zwei Startbedingungen. In einer Ausgestaltung kann eine Startbedingung während der Speisenzubereitung durch die Steuerungseinheit auf ein Erfüllen hin überprüft bzw. überwacht werden. In einer besonders bevorzugten alternativen oder ergänzenden Ausgestaltung kann eine Startbedingung von der Steuerungseinheit dazu verwendet werden, die Rezeptschritte zu Beginn der Speisenzubereitung in eine Reihenfolge zu bringen, die ein Erfüllen der jeweiligen Startbedingungen der einzelnen Rezeptschritte gewährleistet, vorzugsweise mit einer zeitlich optimierten Reihenfolge. Insbesondere ist diese zu Beginn der Speisenzubereitung festgelegte Reihenfolge variabel und ist während der Speisenzubereitung veränderbar. Alternativ ist ein Festlegen einer später unveränderbaren Reihenfolge grundsätzlich möglich.

In einer Ausführungsform ist die Steuerungseinheit so konfiguriert, dass die Steuerungseinheit eine Reihenfolge der Rezeptschritte auf Basis der Startbedingungen der Rezeptschritte und mindestens einer Eingangsgröße festlegt. Die Zubereitungszeit kann dadurch verkürzt werden.

In einer Ausführungsform ist die Steuerungseinheit so konfiguriert, dass die Steuerungseinheit die Reihenfolge der Rezeptschritte während der Speisenzubereitung festlegen oder ändern kann. Durch eine flexibel Anpassung an die aktuelle Situation kann somit die Zubereitungszeit verkürzt werden.

In einer Ausführungsform ist die Steuerungseinheit so konfiguriert, dass die Steuerungseinheit auf Basis der Eingangsgröße ermitteln kann, ob eine Startbedingung eines Rezeptschrittes erfüllt ist, beispielsweise durch einen Vergleich der Eingangsgröße mit einer Startbedingung. Beispielsweise kann eine Startbedingung das Erreichen einer vorgegebenen Temperatur der Speise in dem Topf sein, die aufgrund eines anderen zeitlich früheren Rezeptschrittes erhitzt wird oder wurde. Die Temperatur kann dann die Eingangsgröße sein, so dass der betreffende Rezeptschritt begonnen wird, wenn die Steuerungseinheit anhand der Temperatur ermittelt, dass die Startbedingung erfüllt ist. In einer Ausgestaltung ist die Eingangsgröße eine Information, die von einem Sensorsignal abhängig ist. Vorzugsweise stammt das Sensorsignal von einem Sensor des Haushaltsküchengeräts. In einer alternativen oder ergänzenden Ausgestaltung kann die Eingangsgröße eine Benutzerbestätigung für die Fertigstellung eines insbesondere manuellen Rezeptschrittes oder eine automatisiert erzeugte Statusinformation über eine Fertigstellung eines aktuellen Rezeptschrittes sein. In einer Ausgestaltung kann eine Startbedingung eine Fertigstellung eines bestimmten Rezeptschrittes oder mehrerer bestimmter Rezeptschritte sein. Vorzugsweise wird eine Fertigstellung eines Rezeptschrittes durch den Ablauf der Rezeptschritt-Dauer automatisch von der Steuerungseinheit erkannt.

In einer Ausführungsform ist die Steuerungseinheit so konfiguriert, dass die Steuerungseinheit die Reihenfolge der Rezeptschritte zu Beginn einer Speisenzubereitung festlegen kann. Die gesamte Reihenfolge der Rezeptschritte kann dann zu Beginn einer Speisenzubereitung festlegt werden. Die Reihenfolge für alle Rezeptschritte kann dann zu Beginn einer Speisenzubereitung festgelegt werden. Optional ist eine Änderung der Reihenfolge, die zu Beginn einer Speisenzubereitung festlegt wurde, möglich. Mit "zu Beginn einer Speisenzubereitung" ist der Zeitpunkt gemeint, nachdem der Benutzer ein Rezept ausgewählt hat und/oder bevor der erste Rezeptschritt aktiviert wird oder dem Benutzer zur Aktivierung angezeigt wird.

Zum Festlegen der Reihenfolge der Rezeptschritte zu Beginn einer Speisenzubereitung wertet die Steuerungseinheit die Startbedingungen der Rezeptschritte aus, insbesondere zusammen mit der mindestens einen Eingangsgröße. Vorzugsweise berücksichtigt die Steuereinheit dazu nur diejenigen Startbedingungen der Rezeptschritte, deren jeweilige Erfüllung in Abhängigkeit von einer Reihenfolge der Rezeptschritte ermittelt werden kann. In einer bevorzugten Ausgestaltung werden alle Startbedingungen für die Festlegung der Reihenfolge zu Beginn einer Speisenzubereitung berücksichtigt, wobei Annahmen für Eingangsgrößen zugrunde gelegt werden, die sich erst während der Speisenzubereitung ermitteln lassen oder übermittelt werden. Diese Annahmen können bevorzugt durch das Rezept bereitgestellt werden.

Die Steuerungseinheit umfasst einen Algorithmus zur Generierung einer Reihenfolge der Rezeptschritte auf Basis der Startbedingungen und optional von Eingangsgrößen. Alternativ kann das Rezept der Steuerungseinheit einen Algorithmus zur Generierung einer Reihenfolge bereitstellen, damit die Steuerungseinheit auf Basis der Startbedingungen und optional von Eingangsgrößen eine Reihenfolge der Rezeptschritte festlegen kann.

In einer Ausführungsform beschreibt die Eingangsgröße eine Verfügbarkeit eines externen Nahrungsmittelbearbeitungsgeräts. Die Zubereitungszeit kann so verkürzt werden. Insbesondere ist das externe Nahrungsmittelbearbeitungsgerät ein Mixer, ein Kochtopf auf einem Herd, eine Pfanne auf einem Herd und/oder ein Ofen.

Bevorzugt wird die Eingangsgröße der Verfügbarkeit eines externen Nahrungsmittelbearbeitungsgeräts zu Beginn einer Speisenzubereitung von der Steuerungseinheit erhalten und/oder gemeinsam mit den Startbedingungen der Rezeptschritte ausgewertet, um die Reihenfolge der Rezeptschritte insbesondere zu Beginn einer Speisenzubereitung festzulegen. In einer Ausgestaltung umfasst eine Startbedingung eines Rezeptschrittes mehrere alternative Auswahlmöglichkeiten in Bezug auf das Nahrungsmittelbearbeitungsgerät, das den Rezeptschritt ausführen kann. Insbesondere ist die Haushaltsküchenmaschine eine solche Auswahlmöglichkeit in Bezug auf das Nahrungsmittelbearbeitungsgerät für Rezeptschritte, bei dem eine Speise zerkleinert, gemischt, gebraten oder erhitzt wird. Durch eine Berücksichtigung der zeitlichen Auslastung der für einen Rezeptschritt zur Auswahl stehenden Nahrungsmittelbearbeitungsgeräte, d.h., die Haushaltsküchenmaschine selbst und externe Nahrungsmittelbearbeitungsgeräte, kann eine zeitlich optimierte Reihenfolge der Rezeptschritte erhalten werden.

In einer Ausgestaltung simuliert die Steuerungseinheit eine Vielzahl von möglichen Reihenfolgen, bei denen die Erfüllung aller Startbedingungen aller Rezeptschritte gewährleistet werden kann, und legt diejenige Reihenfolge mit der kürzesten Speisenzubereitungszeit zu Beginn der Speisenzubereitung fest. Insbesondere wird ein Zufallsgenerator eingesetzt, um die Vielzahl von möglichen Reihenfolgen zu erzeugen, bei denen jeweils alle Startbedingungen aller Rezeptschritte erfüllt sind. Bei Rezepten, bei denen die einzelnen Rezeptschritte wenig aufeinander aufbauen, kann ein großer Anteil gleichrangiger Rezeptschritte vorliegen, d.h., mehrere Rezeptschritte sind in einer Reihenfolge austauschbar (unter Erfüllung alle Startbedingungen).

In einer Ausgestaltung wird die Eingangsgröße der Verfügbarkeit eines externen Nahrungsmittelbearbeitungsgeräts während der Speisenzubereitung erhalten. Wenn z.B. der Ofen während der Speisenzubereitung unter Anleitung durch die Haushaltsküchenmaschine parallel noch anderweitig in Benutzung ist und eine am Ofen programmierte Backzeit noch nicht abgelaufen ist, kann die Haushaltsküchenmaschine einen anderen Rezeptschritt vorziehen und die Reihenfolge der Rezeptschritte entsprechend während der Speisenzubereitung ändern. Gleiches gilt, wenn der Ofen plötzlich und unerwartet defekt ist und nicht mehr zur Verfügung steht. In einem anderen Beispiel kann bei einer Verfügbarkeit eines Kochtopfs auf einem Herd während der Speisenzubereitung von der Steuerungseinheit festgelegt werden, dass ein nächster Schritt zum Kochen von z.B. Nudeln in dem Kochtopf stattfinden soll, so dass mit der Haushaltsküchenmaschine die Nudelsause fertiggestellt wird.

In einer Ausführungsform ist das Rezept so konfiguriert, dass eine Startbedingung mehrere alternative Auswahlmöglichkeiten umfassen kann, beispielsweise mehrere einsetzbare Nahrungsmittelbearbeitungsgeräte oder mehrere Betriebseinstellungen für eine Funktionskomponente wie z.B. Soll-Drehzahlen oder Soll-Temperaturen. Eine zeitlich optimierte Reihenfolge der Rezeptschritte kann so erzielt werden, wie weiter unten beschrieben wird.

In einer Ausführungsform ist die Steuerungseinheit so konfiguriert, dass die Steuerungseinheit eine getroffene Auswahl zum Erfüllen einer Startbedingung als ein Parameter zum Durchführen des Rezeptschrittes speichert. Die Steuerungseinheit kann auf diese Weise z.B. im Rahmen einer Simulation einer Vielzahl möglicher Reihenfolgen für die Rezeptschritte eine jeweils unterschiedliche Auswahl für die einzelnen Startbedingungen zugrunde legen und diese Auswahl bei den nachfolgenden Schritten durch das Speichern in dem Parameter berücksichtigen. Eine zeitlich optimierte Reihenfolge der Rezeptschritte kann so erzielt werden.

In einer Ausführungsform ist die Steuerungseinheit so konfiguriert, dass auf Basis der Eingangsgröße der Parameter für einen Rezeptschritt festlegt und gespeichert wird. Eine zeitlich optimierte Reihenfolge der Rezeptschritte kann so erzielt werden.

In einer Ausgestaltung kann für ein Festlegen und Speichern des Parameters während der Speisenzubereitung ein Parameter eines Rezeptschrittes eine Soll-Temperatur, eine Soll-Drehzahl oder eine Soll-Bearbeitungszeit beinhalten. Wenn der Benutzer z.B. eine geringere Soll-Temperatur eingestellt, als das Rezept für den Rezeptschritt ursprünglich vorsah, wird diese Soll-Temperatur des Benutzers verwendet und somit Zeit gespart. Stellt der Benutzer eine höhere Soll-Temperatur ein, kann in einer Ausgestaltung dem Benutzer entweder ein Warnhinweis angezeigt oder die vom Rezept ursprünglich vorgesehene Soll-Temperatur verwendet werden, um Zeit zu sparen. Bevorzugt werden Algorithmen, die den Zusammenhang zwischen einer Eingangsgröße und einem Parameter beschreiben, durch das Rezept bereitgestellt, damit die Steuerungseinheit den Parameter entsprechend festlegen kann.

In einer Ausführungsform ist das Rezept so konfiguriert, dass durch den Parameter ein Nahrungsmittelbearbeitungsgerät für den jeweiligen Rezeptschritt gespeichert wird, das unter mehreren zur Erfüllung einer Startbedingung geeigneten Nahrungsmittelbearbeitungsgeräten ausgewählt wurde. Anders ausgedrückt wird durch den Parameter festgelegt, ob ein Rezeptschritt, der diesem Parameter zugeordnet ist, durch die Haushaltsküchenmaschine oder durch ein externes Nahrungsmittelbearbeitungsgerät auszuführen ist. Die Zubereitungszeit kann auf diese Weise insgesamt verringert werden.

In einer Ausführungsform sind die Rezeptschritte durch das Rezept so definiert, dass zwei Rezeptschritte zeitlich parallel ausgeführt werden können. Beispielsweise kann ein Rezeptschritt mit einer Zerkleinerung einer Zutat durch einen externen Mixer erfolgen, während die Speise in der Haushaltsküchenmaschine über einen längeren Zeitraum gedampft wird, bevor die zerkleinerte Zutat der Speise hinzugegeben wird.

In einer Ausführungsform ist die Steuerungseinheit so konfiguriert, dass die Steuerungseinheit zum Ausführen eines Rezeptschrittes Steuerbefehle des Rezeptschrittes an mindestens eine Funktionskomponente der Haushaltsküchenmaschine übermittelt und andere Steuerbefehle eines zeitlich parallel auszuführenden Rezeptschrittes an ein externes Nahrungsmittelbearbeitungsgerät übermittelt. Die Zubereitungszeit kann auf diese Weise insgesamt verringert werden.

In einer Ausgestaltung umfasst die Steuerungseinheit eine Kommunikationsschnittstelle zum Empfangen von und/oder zum Übermitteln von Daten zu einem externen Nahrungsmittelbearbeitungsgerät. Insbesondere beinhalten die Daten eine Eingangsgröße und/oder Steuerbefehle. Vorzugsweise erfolgt die Übermittlung kabellos, z.B. mittels einer Bluetooth-Kommunikationsschnittstelle oder einer WLAN-Kommunikationsschnittstelle. Insbesondere wird die Eingangsgröße durch ein Nahrungsmittelbearbeitungsgerät übermittelt. Es können in einer Ausgestaltung mehrere Nahrungsmittelbearbeitungsgeräte jeweils eine Eingangsgröße an die Steuerungseinheit übermitteln. In einer Ausgestaltung kann die Steuerung Steuerbefehle an eine oder mehrere externe Nahrungsmittelbearbeitungsgeräte übermitteln. Ein unabhängiger Aspekt der Erfindung betrifft in diesem Zusammenhang ein System umfassend die Haushaltsküchenmaschine und eine oder mehrere externe Nahrungsmittelbearbeitungsgeräte, die alle eine Kommunikationsschnittstelle haben.

In einer Ausführungsform ist das Rezept so konfiguriert, dass zwei zeitlich parallel ausführbare Rezeptschritte mit einer Startbedingung ausgestattet werden können, die einen zeitverzögerten Start des einen Rezeptschrittes relativ zum anderen Rezeptschritt, einen gleichzeitigen Start oder ein gleichzeitiges Fertigstellen der Rezeptschritte vorsieht. Eine möglichst kurze Zubereitungszeit wird so ermöglicht. Ein gleichzeitiges Fertigstellen von zwei parallel ausführbaren Rezeptschritten kann beispielsweise erreicht werden, indem die Rezeptschritt-Dauer des kürzeren Rezeptschrittes von der Rezeptschritt-Dauer des längeren Rezeptschrittes abgezogen wird und diese Differenz als Verzögerungszeit genutzt wird. Nach dem Start des einen Rezeptschrittes wird dann nach Ablauf der Verzögerungszeit der andere Rezeptschritt gestartet und auf diese Weise dessen (diesbezügliche) Startbedingung erfüllt.

Erfindungsgemäß ist das Rezept so konfiguriert, dass einem Rezeptschritt oder alternativen Auswahlmöglichkeiten einer Startbedingung eine Priorisierungsinformation oder ein Priorisierungs-Algorithmus durch das Rezept zugeordnet wird. Auf diese Weise können zeitoptimierte Abläufe verbessert in die Festlegung der Reihenfolge einfließen.

Eine Priorisierungsinformation kann z.B. ein Priorisierungswert sein, so dass ein Rezeptschritt mit einem hohen Priorisierungswert wenn möglich zeitlich vor einem Rezeptschritt mit einem niedrigen Priorisierungswert in der Reihenfolge der Rezeptschritte angeordnet oder bei einer parallelen Anordnung von Rezeptschritten früher gestartet wird. Ein Priorisierungs-Algorithmus kann die Priorisierung von mehreren gleichrangigen Rezeptschritten oder alternativen Auswahlmöglichkeiten vornehmen. Beispielsweise kann ein Priorisierungs-Algorithmus vorschreiben, dass bei gleichrangigen Rezeptschritten solche Rezeptschritte mit kürzerer Dauer vorrangig in der Reihenfolge angeordnet werden sollen.

In einer Ausgestaltung hat die Haushaltsküchenmaschine stets eine höhere Priorisierung in Form einer Priorisierungsinformation oder in einem Priorisierungs-Algorithmus, wenn mehrere - insbesondere ansonsten gleichrangige - Nahrungsmittelbearbeitungsgeräte als alternative Auswahlmöglichkeiten einer Startbedingung vorhanden sind. Hierdurch wird ermöglicht, dass die Haushaltsküchenmaschine, die allgemein bereits auf eine kurze Zubereitungszeit optimiert ist, vorranging zum Einsatz kommt. Die Zubereitungszeit kann auf diese Weise weiter reduziert werden.

In einer Ausführungsform ist das Rezept so konfiguriert, dass mehrere Rezeptschritte zu einem Modul zusammengefasst werden. Eine zeitoptimierte Reihenfolge der Rezeptschritte kann so besonders effizient festgelegt werden. Insbesondere wird ein Modul als ganzes in einer Reihenfolge angeordnet. So kann zum Beispiel eine zeitliche Reihenfolge für zwei Rezeptschritte des Moduls, die unmittelbar aufeinander folgen sollen, durch das Rezept vorgegeben fest sein. Es ist auch in einer Ausgestaltung möglich, dass eine feste Anordnung alle Rezeptschritte des Moduls zueinander, insbesondere zeitlich parallel und/oder sukzessiv, durch das Rezept vorgegeben wird.

In einer Ausgestaltung ist das Rezept so konfiguriert, dass die Startbedingung eines Rezeptschrittes unabhängig von einem anderen Rezeptschritt oder abhängig von einem anderen Rezeptschritt ist. Insbesondere ist das Rezept so konfiguriert, dass in einer Startbedingung eine Verknüpfung oder Abhängigkeit in Bezug auf den Start oder die Fertigstellung eines bestimmten anderen Rezeptschrittes oder mehrerer anderer bestimmter Rezeptschritte festgelegt ist. In einer Ausgestaltung ist eine Startbedingung vorgesehen, die einen unmittelbar vorhergehenden Rezeptschritt vorschreibt.

Ein zweiter Aspekt der Erfindung betrifft ein Verfahren zum Steuern einer Haushaltsküchenmaschine mit mehreren elektrisch betreibbaren Funktionskomponenten zum Zubereiten einer Speise in einem Topf, mit den Schritten:
- Zugreifen, durch eine Steuerungseinheit der Haushaltsküchenmaschine, auf ein Rezept mit mehreren Rezeptschritten, durch die ein Betrieb einer der Funktionskomponenten gesteuert werden kann; wobei eine Reihenfolge der Rezeptschritte offen ist, d.h., das Rezept definiert die Reihenfolge der Rezeptschritte nicht, sondern das Rezept definiert für mehrere Rezeptschritte jeweils mindestens ein Startbedingung,
- Festlegen, durch eine Steuerungseinheit, zumindest eines nächsten Rezeptschrittes spätestens am Ende eines vorhergehenden Rezeptschrittes in Abhängigkeit von den Startbedingungen der Rezeptschritte, um die Reihenfolge der Rezeptschritte auf Basis der Startbedingungen der Rezeptschritte festzulegen,
wobei das Rezept so konfiguriert ist, dass einem Rezeptschritt oder alternativen Auswahlmöglichkeiten einer Startbedingung eine Priorisierungsinformation oder ein Priorisierungs-Algorithmus durch das Rezept zur Festlegung der Reihenfolge zugeordnet wird.

Ein dritter Aspekt der Erfindung betrifft ein Computerprogrammprodukt, umfassend Befehle, die bewirken, dass die erfindungsgemäße Haushaltsküchenmaschine die Verfahrensschritte gemäß dem zweiten Aspekt der Erfindung ausführt.

Nachfolgend werden Ausführungsbeispiele der Erfindung auch anhand von Figuren näher erläutert.

Es zeigen:
- Figur 1:: Schematische Darstellung einer Speisenzubereitung unter Einsatz der Erfindung;
- Figur 2:: Schematische Darstellung eines Rezepts gemäß der Erfindung;
- Figur 3:: Schematische Darstellung eines Verfahrens zum Festlegen einer Reihenfolge von Rezeptschritten gemäß der Erfindung;
- Figur 4:: Schematische Darstellung einer Speisenzubereitung gemäß dem Stand der Technik.

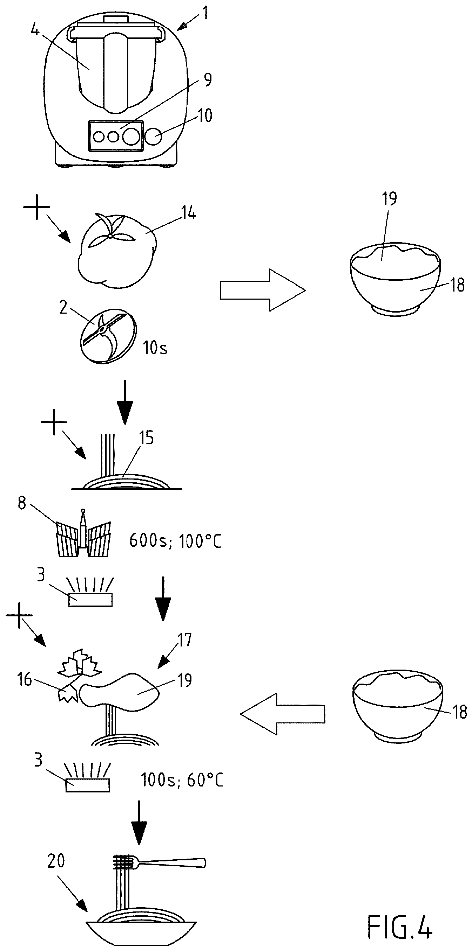

Die Figur 4 illustriert eine Speisenzubereitung gemäß dem Stand der Technik, bei dem eine Haushaltsküchenmaschine 1 gemäß einer nicht dargestellten digitalen Rezeptdatei mehrere teilautomatisierte Rezeptschritte ausführt. Ein Touchscreen-Display 9 und/oder ein Drehknopf 10 bilden eine Benutzerschnittstelle. Die Reihenfolge der Rezeptschritte ist fest und unveränderbar durch die Rezeptdatei vorgegeben. Nachdem der Benutzer nach einer entsprechenden Aufforderung eine Tomate 14 in den Topf 4 gegeben hat (durch "+" dargestellt), wird die Tomate 14 durch das drehbare Werkzeug 2 zerkleinert und der Benutzer füllt das Zwischenprodukt 19 in eine Schale 18 zur temporären Aufbewahrung. Nach einem Kochen von Nudeln 15 unter Erhitzung durch das Heizelement 3 und Rühren mittels des Aufsatzes 8 für das Werkzeug 2 in dem Topf 4 wird eine weitere Zutat 16 zusammen mit dem Zwischenprodukt 19 der Schale 18 zu den gekochten Nudeln 15 gegeben, und das Speisengemisch 17 wird erhitzt. Die fertig zubereitete Speise 20 kann nun dem Topf 4 entnommen und serviert werden.

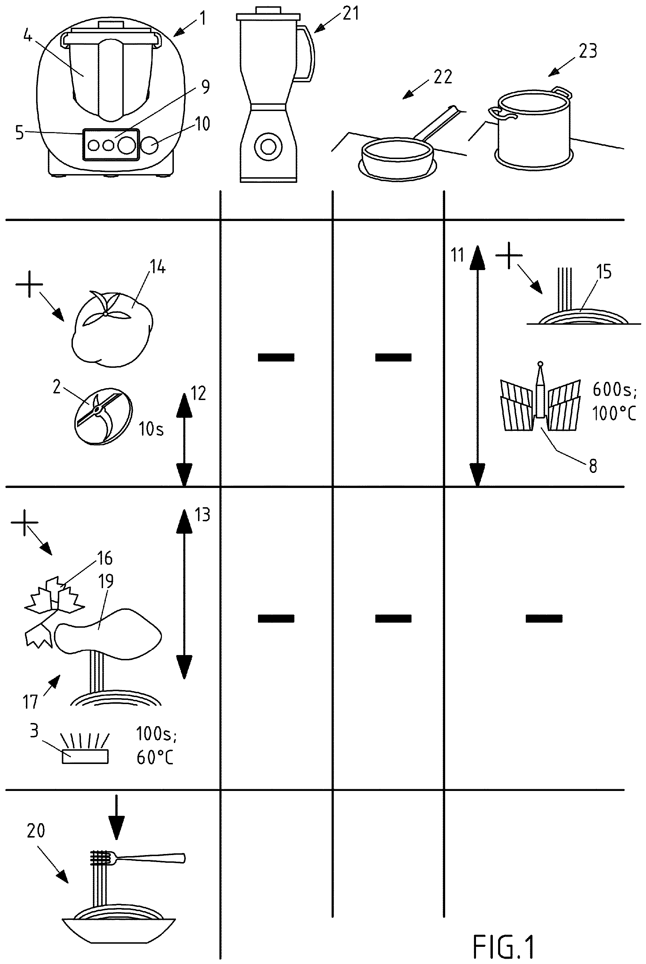

Die Figur 1 illustriert die Zubereitung derselben Speise 20 wie in Figur 4, jedoch durch den Einsatz der Erfindung in einer kürzeren Zubereitungszeit. Die Zeitersparnis infolge einer Parallelisierung von zwei Rezeptschritten 11, 12 ist lediglich ein Beispiel. In anderen Beispielen, auf die hier nicht näher eingegangen wird, kann eine Zeitersparnis z.B. durch ein gezieltes Anordnen der Rezeptschritte oder Ändern der Reihenfolge der Rezeptschritte in Reaktion auf eine bestimmte Situation oder eine bekannte Eigenart eines Benutzers erzielt werden.

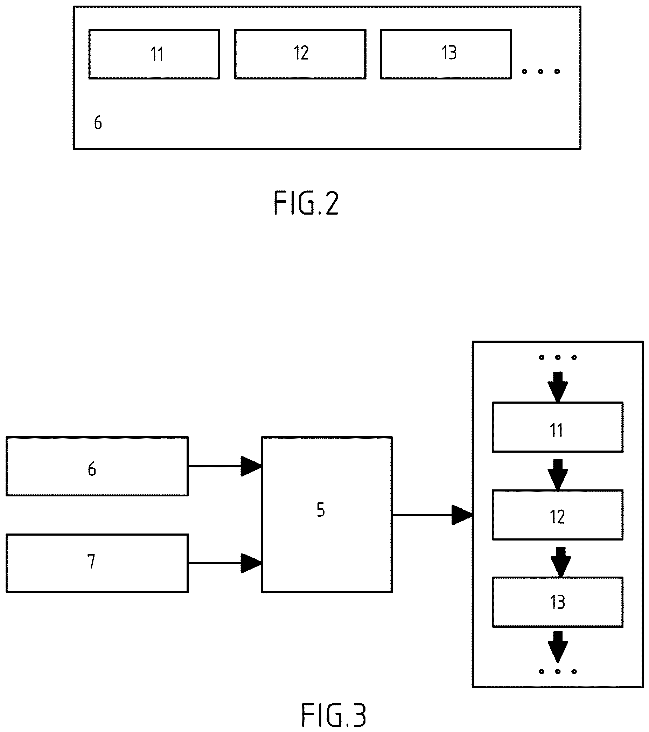

In dem dargestellten Beispiel greift die Haushaltsküchenmaschine 1 auf ein in Fig. 2 gezeigtes Rezept 6 zu. Wie in Figur 2 schematisch illustriert, umfasst und definiert das Rezept 6 mehrere Rezeptschritte 11, 12, 13, ohne eine feste Reihenfolge vorzuschreiben. Die Definition der Rezeptschritte 11, 12, 13 durch das Rezept 6 umfasst mindestens eine Startbedingung für jeweils einen Rezeptschritt 11, 12, 13, so dass die Steuerungseinheit 5 auf Basis der Startbedingungen der Rezeptschritte 11, 12, 13 eine Reihenfolge der Rezeptschritte 11, 12, 13 festlegen kann. Das Rezept 6 kann auf einem Datenträger, einem Speicher der Steuerungseinheit 5, in einem Cloud-Speicher oder einer externen Datenbank abgelegt sein, wobei die Haushaltsküchenmaschine 1 eine entsprechende Kommunikationsschnittstelle zum Zugriff auf das Rezept 6 aufweist.

In dem vorliegenden Beispiel wird wie in Fig. 3 illustriert eine Eingangsgröße 7 gemeinsam mit den Startbedingungen der Rezeptschritte 11, 12, 13 durch die Steuerungseinheit 5 ausgewertet, um eine Reihenfolge der Rezeptschritte 11, 12, 13 festzulegen. Im gezeigten Beispiel beschreibt die Eingangsgröße 7 eine Verfügbarkeit von mehreren, in der Fig. 1 gezeigten, externen Nahrungsmittelbearbeitungsgeräten 21, 22, 23.

Wie in Figur 1 dargestellt, sind als grundsätzlich einsetzbare Nahrungsmittelbearbeitungsgeräte die Haushaltsküchenmaschine 1 sowie ein externer Mixer 21, eine externe Pfanne 22 auf einem Herd, und ein externer Kochtopf 23 auf einem Herd vorhanden. Über eine nicht dargestellte Kommunikationsschnittstelle - alternativ oder ergänzend über eine Benutzereingabe durch den Benutzer - erhält die Steuerungseinheit 5 eine Informationen über die Verfügbarkeit des externen Mixers 21, der externen Pfanne 22 auf dem Herd und dem externen Kochtopf 23 auf dem Herd. Diese Informationen über die Verfügbarkeiten stellt die Eingangsgröße dar. Insbesondere übermittelt bei der Pfanne 22 und dem Kochtopf 23 der Herd die Information über dessen Verfügbarkeit, vorzugsweise von zumindest einer Herdplatte für eine Pfanne 22 und/oder eines Kochtopfes 23. Bevorzugt wird die Verfügbarkeit einer Pfanne 22 und eines Kochtopfes 23 als gegeben angenommen oder separat durch den Benutzer bestätigt.

Die Steuerungseinheit 5 der Haushaltsküchenmaschine 1 wertet nun die Startbedingungen der Rezeptschritte 11, 12, 13 aus dem Rezept 6 (Fig. 2) und die mindestens eine Eingangsgröße 7 (Fig. 3) aus. In einer Ausgestaltung werden in den Startbedingungen der Rezeptschritte 11, 12, 13 jeweils die benötigten Nahrungsmittelverarbeitungsprozesse (Zerkleinern, Rühren, Mischen, Erhitzen, Dampfen, Braten) definiert, und/oder die Steuerungseinheit 5 weist den externen Nahrungsmittelbearbeitungsgeräten und den (internen) Funktionskomponenten 2, 3 der Haushaltsküchenmaschine 1 Nahrungsmittelverarbeitungsprozesse zu. Alternativ oder ergänzend umfasst eine Startbedingung mehrere alternative Auswahlmöglichkeiten an Nahrungsmittelbearbeitungsgeräten für den jeweiligen Rezeptschritt 11, 12, 13. in einer Ausführungsform ist ein Display, bevorzugt das Touchscreen-Display 9, eine Funktionskomponente. Insbesondere zeigt das Display bzw. das Touchscreen-Display 9 dem Benutzer Anweisungen zum manuellen Ausführen eines Schrittes oder Teilschrittes eines Rezeptes 6 an, z.B. Hinzufügen einer Zutat in den Topf 4. Das Hinzufügen kann entweder automatisch z.B. mithilfe einer nicht dargestellten Waage erkannt oder durch den Benutzer bestätigt werden, z.B. insbesondere durch die Benutzerschnittstelle. Durch einen Parameter kann die Auswahl eines von mehreren möglichen Nahrungsmittelbearbeitungsgeräten 1, 21, 22, 23 für den jeweiligen Rezeptschritt 11, 12, 13 gespeichert werden.

Beispielsweise wird in dem gezeigten Beispiel in den Startbedingungen vorgeschrieben, dass der Rezeptschritt 13 (Erhitzen eines Speisengemisches 17) sowohl nach Fertigstellung des Rezeptschritts 11 (Nudeln 15 kochen) als auch nach Fertigstellung des Rezeptschritts 12 (Tomate 14 zerkleinern) auszuführen ist. In Rezeptschritt 13 wird das Speisengemisch 17 erhitzt, das aus den gekochten Nudeln 15 des Rezeptschritts 11, einem Zwischenprodukt 19 von zerkleinerten Tomaten 14 des Rezeptschrittes 12 und einer weiteren Zutat 16 besteht.

Ferner kann z.B. durch das Rezept 6 in den Startbedingungen der Rezeptschritte 11 und 12 definiert sein, dass diese Rezeptschritte 11 und 12 parallel ausführbar sind. Darüber hinaus kann z.B. durch das Rezept 6 in den Startbedingungen der Rezeptschritte 11 und 12 definiert sein, dass der Rezeptschritt 12 aufgrund der kürzeren Rezeptschritt-Dauer zeitverzögert relativ zum Rezeptschritt 11 starten kann, insbesondere damit beide Rezeptschritte im Falle einer parallelen Anordnung ungefähr gleichzeitig enden. Der Benutzer hat dadurch z.B. Zeit, den Topf 4 der Haushaltsküchenmaschine 1 zu reinigen, ohne dadurch die Zubereitungszeit insgesamt zu verlängern.

Die Steuerungseinheit 5 hat durch die Eingangsgröße 7 die Information erhalten, dass der Mixer 21 nicht verfügbar ist und die Pfanne 22 auf dem Herd und der Kochtopf 23 auf dem Herd verfügbar sind. Da keine der Rezeptschritte 11, 12, 13 gemäß den Startbedingungen mit einer Pfanne 22 ausgeführt werden können, scheidet die Pfanne 22 bei der Festlegung der Reihenfolge der Rezeptschritte 11, 12, 13 bereits aus. Die Steuerungseinheit 5 simuliert mehrere mögliche Reihenfolgen der Rezeptschritte 11, 12, 13, bei denen ein Erfüllen der Startbedingungen sichergestellt werden kann. Dabei werden Priorisierungsinformationen der einzelnen Rezeptschritte 11, 12, 13 berücksichtigt, wonach z.B. die Haushaltsküchenmaschine 1 für den Rezeptschritt 13 mit einer größeren Priorisierung verglichen beispielsweise mit dem Kochtopf 23 auf dem Herd eingesetzt zu werden hat.

Am Ende der Auswertung legt die Steuerungseinheit 5 diejenige Reihenfolge mit der kürzesten Zubereitungszeit fest, bei der ein Erfüllen aller Startbedingungen sichergestellt wird.

Das Ergebnis ist in Fig. 1 gezeigt. Mit "-" wird ein Nahrungsmittelbearbeitungsgerät markiert, das von der Steuerungseinheit 5 gemäß der festgelegten Reihenfolge mit den oben erwähnten Parametern (für die Festlegung der Zuordnung eines Rezeptschrittes 11, 12, 13 zu einem Nahrungsmittelbearbeitungsgerät 1, 21, 22, 23) nicht für den betreffenden Rezeptschrittes 11, 12, 13 vorgesehen ist. Vereinfachend wurden in dem gezeigten Beispiel der Fig. 1 nicht alle einzelnen Rezeptschritte als solche separat beschrieben, wie z.B. das Hinzufügen der entsprechenden Zutaten in den Topf 4. Auch das Hinzufügen einer Zutat kann ein eigenständiger Rezeptschritt sein und als solcher im Rezept 6 mittels mindestens einer Startbedingung definiert werden.

## Patentansprüche

1. Haushaltsküchenmaschine (1) mit mehreren elektrisch betreibbaren Funktionskomponenten (2, 3) zum Zubereiten einer Speise (20) in einem Topf (4), wobei eine Steuerungseinheit (5) der Haushaltsküchenmaschine (1) auf ein Rezept (6) zugreifen und durch einen Rezeptschritt (11, 12, 13) des Rezeptes (6) veranlasst werden kann, eine der Funktionskomponenten (2, 3) in einer durch den Rezeptschritt (11, 12, 13) definierten Weise zu betreiben, wobei das Rezept (6) so konfiguriert ist, dass eine Reihenfolge der Rezeptschritte (11, 12, 13) offen ist, d.h., das Rezept (6) definiert die Reihenfolge der Rezeptschritte (11, 12, 13) nicht, sondern das Rezept (6) definiert für mehrere Rezeptschritte (11, 12, 13) jeweils mindestens eine Startbedingung, und die Steuerungseinheit (5) ist so konfiguriert, dass die Steuerungseinheit (5) in Abhängigkeit von den Startbedingungen der Rezeptschritte (11, 12, 13) zumindest einen nächsten Rezeptschritt (13) spätestens am Ende eines vorhergehenden Rezeptschrittes (11, 12) festlegen kann, um die Reihenfolge der Rezeptschritte (11, 12, 13) auf Basis der Startbedingungen der Rezeptschritte (11, 12, 13) festzulegen, wobei das Rezept (6) so konfiguriert ist, dass einem Rezeptschritt (11, 12, 13) oder alternativen Auswahlmöglichkeiten einer Startbedingung eine Priorisierungsinformation oder ein Priorisierungs-Algorithmus durch das Rezept (6) zur Festlegung der Reihenfolge zugeordnet wird.

2. Haushaltsküchenmaschine (1) nach Anspruch 1, **dadurch gekennzeichnet, dass** die Steuerungseinheit (5) so konfiguriert ist, dass die Steuerungseinheit (5) die Reihenfolge der Rezeptschritte (11, 12, 13) auf Basis der Startbedingungen der Rezeptschritte (11, 12, 13) und mindestens einer Eingangsgröße (7) festlegt.

3. Haushaltsküchenmaschine (1) nach dem vorhergehenden Anspruch, **dadurch gekennzeichnet, dass** die Steuerungseinheit (5) so konfiguriert ist, dass die Steuerungseinheit (5) die Reihenfolge der Rezeptschritte (11, 12, 13) während der Speisenzubereitung festlegen oder ändern kann und/oder auf Basis der Eingangsgröße (7) ermitteln kann, ob eine Startbedingung eines Rezeptschrittes (11, 12, 13) erfüllt ist.

4. Haushaltsküchenmaschine nach einem der vorhergehenden Ansprüche, **dadurch gekennzeichnet, dass** die Steuerungseinheit (5) so konfiguriert ist, dass die Steuerungseinheit (5) die Reihenfolge der Rezeptschritte (11, 12, 13) zu Beginn einer Speisenzubereitung festlegen kann.

5. Haushaltsküchenmaschine (1) nach einem der drei vorhergehenden Ansprüche, **dadurch gekennzeichnet, dass** die Eingangsgröße (7) eine Verfügbarkeit eines externen Nahrungsmittelbearbeitungsgeräts (21, 22, 23) beschreibt.

6. Haushaltsküchenmaschine (1) nach einem der vier vorhergehenden Ansprüche, **dadurch gekennzeichnet, dass** das Rezept (6) so konfiguriert ist, dass eine Startbedingung mehrere alternative Auswahlmöglichkeiten umfassen kann, und/oder die Steuerungseinheit (5) so konfiguriert ist, dass die Steuerungseinheit (5) eine getroffene Auswahl zum Erfüllen einer Startbedingung als ein Parameter zum Durchführen des Rezeptschrittes (11, 12, 13) speichert.

7. Haushaltsküchenmaschine (1) nach dem vorhergehenden Anspruch, **dadurch gekennzeichnet, dass** das Rezept (6) so konfiguriert ist, dass durch den Parameter ein Nahrungsmittelbearbeitungsgerät (1, 21, 22, 23) für den jeweiligen Rezeptschritt (11, 12, 13) gespeichert wird, das unter mehreren zur Erfüllung einer Startbedingung geeigneten Nahrungsmittelbearbeitungsgeräten (1, 21, 22, 23) ausgewählt wurde.

8. Haushaltsküchenmaschine nach einem der vorhergehenden Ansprüche, **dadurch gekennzeichnet, dass** die Rezeptschritte (11, 12, 13) durch das Rezept (6) so definiert sind, dass zwei Rezeptschritte (11, 12, 13) zeitlich parallel ausgeführt werden können.

9. Haushaltsküchenmaschine (1) nach dem vorhergehenden Anspruch, **dadurch gekennzeichnet, dass** die Steuerungseinheit (5) so konfiguriert ist, dass die Steuerungseinheit (5) zum Ausführen eines Rezeptschrittes (12) Steuerbefehle des Rezeptschrittes (12) an mindestens eine Funktionskomponente (2, 3) der Haushaltsküchenmaschine (1) übermittelt und andere Steuerbefehle eines zeitlich parallel auszuführenden Rezeptschrittes (11) an ein externes Nahrungsmittelbearbeitungsgerät (1, 21, 22, 23) übermittelt.

10. Haushaltsküchenmaschine (1) nach einem der zwei vorhergehenden Ansprüche, **dadurch gekennzeichnet, dass** das Rezept (6) so konfiguriert ist, dass zwei zeitlich parallel ausführbare Rezeptschritte (11, 12) mit einer Startbedingung ausgestattet werden können, die einen zeitverzögerten Start des einen Rezeptschrittes (12) relativ zum anderen Rezeptschritt (11), einen gleichzeitigen Start oder ein gleichzeitiges Fertigstellen der Rezeptschritte (11, 12) vorsieht.

11. Haushaltsküchenmaschine (1) nach einem der vorhergehenden Ansprüche, **dadurch gekennzeichnet, dass** das Rezept (6) so konfiguriert ist, dass mehrere Rezeptschritte (11, 12, 13) zu einem Modul zusammengefasst werden.

12. Verfahren zum Steuern einer Haushaltsküchenmaschine (1) mit mehreren elektrisch betreibbaren Funktionskomponenten (2, 3) zum Zubereiten einer Speise (20) in einem Topf (4), mit den Schritten:
- Zugreifen, durch eine Steuerungseinheit (5) der Haushaltsküchenmaschine (1), auf ein Rezept (6) mit mehreren Rezeptschritten (11, 12, 13), durch die ein Betrieb einer der Funktionskomponenten (2, 3) gesteuert werden kann, wobei eine Reihenfolge der Rezeptschritte (11, 12, 13) offen ist, d.h., das Rezept (6) definiert die Reihenfolge der Rezeptschritte (11, 12, 13) nicht, sondern das Rezept (6) definiert für mehrere Rezeptschritte (11, 12, 13) jeweils mindestens eine Startbedingung,
- Festlegen, durch eine Steuerungseinheit (5), zumindest eines nächsten Rezeptschrittes (13) spätestens am Ende eines vorhergehenden Rezeptschrittes (11, 12) in Abhängigkeit von den Startbedingungen der Rezeptschritte (11, 12, 13), um die Reihenfolge der Rezeptschritte (11, 12, 13) auf Basis der Startbedingungen der Rezeptschritte (11, 12, 13) festzulegen,
wobei das Rezept (6) so konfiguriert ist, dass einem Rezeptschritt (11, 12, 13) oder alternativen Auswahlmöglichkeiten einer Startbedingung eine Priorisierungsinformation oder ein Priorisierungs-Algorithmus durch das Rezept (6) zur Festlegung der Reihenfolge zugeordnet wird.

13. Computerprogrammprodukt, umfassend Befehle, die bewirken, dass die Haushaltsküchenmaschine (1) nach einem der Ansprüche 1 bis 11 die Verfahrensschritte nach Anspruch 12 ausführt.

## Claims

1. Domestic food processor (1) with a plurality of electrically operable functional components (2, 3) for preparing a food (20) in a pot (4), wherein a control unit (5) of the domestic food processor (1) can access a recipe (6) and can be caused by a recipe step (11, 12, 13) of the recipe (6) to operate one of the functional components (2, 3) in a manner defined by the recipe step (11, 12, 13), wherein the recipe (6) is configured such that a sequence of the recipe steps (11, 12, 13) is left open, i.e., the recipe (6) does not define the sequence of the recipe steps, but the recipe (6) defines at least one start condition for each of a plurality of recipe steps (11, 12, 13), and the control unit (5) is configured such that, depending on the start conditions of the recipe steps (11, 12, 13), the control unit (5) can set at least one next recipe step (13) at the latest at the end of a preceding recipe step (11, 12), in order to set the sequence of the recipe steps (11, 12, 13) on the basis of the start conditions of the recipe steps (11, 12, 13), wherein the recipe (6) is configured such that a prioritization information or a prioritization algorithm is assigned by the recipe (6) to a recipe step (11, 12, 13) or alternative choices of a start condition for setting the sequence.

2. Domestic food processor (1) according to claim 1, **characterized in that** the control unit (5) is configured such that the control unit (5) sets the sequence of the recipe steps (11, 12, 13) on the basis of the start conditions of the recipe steps (11, 12, 13) and at least one input variable (7).

3. Domestic food processor (1) according to the preceding claim, **characterized in that** the control unit (5) is configured such that the control unit (5) can set or change the sequence of the recipe steps (11, 12, 13) during food preparation and/or can determine on the basis of the input variable (7) whether a start condition of a recipe step (11, 12, 13) is fulfilled.

4. Domestic food processor according to one of the preceding claims, **characterized in that** the control unit (5) is configured such that the control unit (5) can set the sequence of recipe steps (11, 12, 13) at the beginning of a food preparation.

5. Domestic food processor (1) according to one of the three preceding claims, **characterized in that** the input variable (7) describes an availability of an external food processing apparatus (21, 22, 23).

6. Domestic food processor (1) according to one of the four preceding claims, **characterized in that** the recipe (6) is configured such that a start condition may comprise a plurality of alternative choices, and/or the control unit (5) is configured such that the control unit (5) saves a selection made for fulfilling a start condition as a parameter for performing the recipe step (11, 12, 13).

7. Domestic food processor (1) according to the preceding claim, **characterized in that** the recipe (6) is configured such that a food processing apparatus (1, 21, 22, 23) is saved by said parameter for the respective recipe step (11, 12, 13) selected from a plurality of food processing apparatuses (1, 21, 22, 23) suitable for fulfilling a start condition.

8. Domestic food processor according to one of the preceding claims, **characterized in that** the recipe steps (11, 12, 13) are defined by the recipe (6) such that two recipe steps (11, 12, 13) can be executed in parallel in time.

9. Domestic food processor (1) according to the preceding claim, **characterized in that** the control unit (5) is configured such that for executing a recipe step (12) the control unit (5) transmits control commands of the recipe step (12) to at least one functional component (2, 3) of the domestic food processor (1) and transmits other control commands of a recipe step (11) to be executed in parallel in time to an external food processing apparatus (1, 21, 22, 23).

10. Domestic food processor (1) according to one of the two preceding claims, **characterized in that** the recipe (6) is configured such that two recipe steps (11, 12) which are executable in parallel in time can be furnished with a start condition which provides for a time-delayed start of one recipe step (12) relative to the other recipe step (11), a simultaneous start or a simultaneous completion of the recipe steps (11, 12).

11. Domestic food processor (1) according to one of the preceding claims, **characterized in that** the recipe (6) is configured such that a plurality of recipe steps (11, 12, 13) are combined into a module.

12. Method for controlling a domestic food processor (1) with a plurality of electrically operable functional components (2, 3) for preparing a food (20) in a pot (4), comprising the steps:
- Accessing, by a control unit (5) of the domestic food processor (1), a recipe (6) with a plurality of recipe steps (11, 12, 13) by which an operation of one of the functional components (2, 3) can be controlled, wherein a sequence of the recipe steps (11, 12, 13) is left open, i.e., the recipe (6) does not define the sequence of the recipe steps, but the recipe (6) defines at least one start condition for each of a plurality of recipe steps (11, 12, 13),
- Setting, by a control unit (5), at least one next recipe step (13) at the latest at the end of a preceding recipe step (11, 12) depending on the start conditions of the recipe steps (11, 12, 13) in order to set the sequence of the recipe steps (11, 12, 13) on the basis of the start conditions of the recipe steps (11, 12, 13),
wherein the recipe (6) is configured such that a prioritization information or a prioritization algorithm is assigned by the recipe (6) to a recipe step (11, 12, 13) or alternative choices of a start condition for setting the sequence.

13. Computer program product comprising instructions which cause the domestic food processor according to one of the claims 1 to 11 to perform the method steps according to claim 12.

## Revendications

1. Machine de cuisine ménagère (1) comprenant plusieurs composants fonctionnels (2, 3) pouvant être actionnés électriquement pour préparer un plat (20) dans une casserole (4), dans lequel une unité de commande (5) de la machine de cuisine ménagère (1) a accès à une recette (6) et peut être amenée par une étape de recette (11, 12, 13) de la recette (6) à faire fonctionner l'un des composants fonctionnels (2, 3) d'une manière définie par l'étape de recette (11, 12, 13), la recette (6) étant configurée de telle sorte qu'un ordre des étapes de recette (11, 12, 13) soit ouvert, c'est-à-dire la recette (6) ne définit pas l'ordre des étapes de recette (11, 12, 13), mais la recette (6) définit pour plusieurs étapes de recette (11, 12, 13) respectivement au moins une condition de démarrage, et l'unité de commande (5) est configurée de telle sorte que l'unité de commande (5), en fonction des conditions de départ des étapes de recette (11, 12, 13), peut définir au moins une étape de recette suivante (13) au plus tard à la fin d'une étape de recette précédente (11, 12) afin de déterminer l'ordre des étapes de recette (11, 12, 13) sur la base des conditions de départ des étapes de recette (11, 12, 13), la recette (6) étant configurée de telle sorte qu'une information de priorisation ou un algorithme de priorisation est associé par la recette (6) à une étape de recette (11, 12, 13) ou à des choix alternatifs d'une condition de démarrage pour déterminer l'ordre.

2. Machine de cuisine ménagère (1) selon la revendication 1, **caractérisée en ce que** l'unité de commande (5) est configurée de telle sorte que l'unité de commande (5) détermine l'ordre des étapes de recette (11, 12, 13) sur la base des conditions de départ des étapes de recette (11, 12, 13) et d'au moins une grandeur d'entrée (7).

3. Machine de cuisine ménagère (1) selon la revendication précédente, **caractérisée en ce que** l'unité de commande (5) est configurée de telle sorte que l'unité de commande (5) peut fixer ou modifier l'ordre des étapes de recette (11, 12, 13) pendant la préparation de plat et/ou peut déterminer si une condition de démarrage d'une étape de recette (11, 12, 13) est remplie sur la base de la grandeur d'entrée (7).

4. Machine de cuisine ménagère selon l'une des revendications précédentes, **caractérisée en ce que** l'unité de commande (5) est configurée de telle sorte que l'unité de commande (5) peut fixer l'ordre des étapes de recette (11, 12, 13) au début d'une préparation de plat.

5. Machine de cuisine ménagère (1) selon l'une des trois revendications précédentes, **caractérisée en ce que** la grandeur d'entrée (7) décrit une disponibilité d'un appareil externe de traitement d'aliments (21, 22, 23).

6. Machine de cuisine ménagère (1) selon l'une des quatre revendications précédentes, **caractérisée en ce que** la recette (6) est configurée de telle sorte qu'une condition de démarrage peut comprendre plusieurs choix alternatifs, et/ou l'unité de commande (5) est configurée de telle sorte que l'unité de commande (5) mémorise un choix effectué pour remplir une condition de démarrage en tant que paramètre pour exécuter l'étape de recette (11, 12, 13).

7. Machine de cuisine ménagère (1) selon la revendication précédente, **caractérisée en ce que** la recette (6) est configurée pour mémoriser, par le paramètre, un appareil de traitement d'aliments (1, 21, 22, 23) pour l'étape de recette respective (11, 12, 13) qui a été sélectionné parmi plusieurs appareils de traitement d'aliments (1, 21, 22, 23) appropriés pour remplir une condition de démarrage.

8. Machine de cuisine ménagère (1) selon l'une des revendications précédentes, **caractérisée en ce que** les étapes de recette (11, 12, 13) sont définies par la recette (6) de telle sorte que deux étapes de recette (11, 12, 13) peuvent être exécutées en parallèle dans le temps.

9. Machine de cuisine ménagère (1) selon la revendication précédente, **caractérisée en ce que** l'unité de commande (5) est configurée de telle sorte que, pour exécuter une étape de recette (12), l'unité de commande (5) transmet des instructions de commande de l'étape de recette (12) à au moins un composant fonctionnel (2, 3) de la machine de cuisine ménagère (1) et transmet d'autres instructions de commande d'une étape de recette (11) à exécuter en parallèle dans le temps à un appareil externe de traitement d'aliments (1, 21, 22, 23).

10. Machine de cuisine ménagère (1) selon l'une des deux revendications précédentes, **caractérisée en ce que** la recette (6) est configurée de telle sorte que deux étapes de recette (11, 12) exécutables en parallèle dans le temps peuvent être dotées d'une condition de démarrage qui prévoit un démarrage différé d'une étape de recette (12) par rapport à l'autre étape de recette (11), un démarrage simultané ou un achèvement simultané des étapes de recette (11, 12).

11. Machine de cuisine ménagère (1) selon l'une des revendications précédentes, **caractérisé en ce que** la recette (6) est configurée de manière à ce que plusieurs étapes de la recette (11, 12, 13) soient rassemblées en un module.

12. Procédé de commande d'une machine de cuisine ménagère (1) comportant plusieurs composants fonctionnels (2, 3) pouvant être actionnés électriquement pour préparer un plat (20) dans une casserole (4), comprenant les étapes :
- accéder, par une unité de commande (5) de la machine de cuisine ménagère (1), à une recette (6) avec plusieurs étapes de recette (11, 12, 13), par lesquelles un fonctionnement de l'un des composants fonctionnels (2, 3) peut être commandé, un ordre des étapes de recette (11, 12, 13) étant ouvert, c'est-à-dire la recette (6) ne définit pas l'ordre des étapes de recette (11, 12, 13), mais la recette (6) définit pour plusieurs étapes de recette (11, 12, 13) respectivement au moins une condition de démarrage,
- fixer, par une unité de commande (5), d'au moins une étape de recette suivante (13) au plus tard à la fin d'une étape de recette précédente (11, 12) en fonction des conditions de démarrage des étapes de recette (11, 12, 13), afin de fixer l'ordre des étapes de recette (11, 12, 13) sur la base des conditions de départ des étapes de recette (11, 12, 13),
la recette (6) étant configurée de telle sorte qu'une information ou un algorithme de priorisation est associé par la recette (6) à une étape de recette (11, 12, 13) ou à des choix alternatifs d'une condition de démarrage pour déterminer l'ordre.

13. Produit de programme d'ordinateur comprenant des instructions qui amènent la machine de cuisine ménagère (1) selon l'une des revendications 1 à 11 à exécuter les étapes de procédé selon la revendication 12.
